(19) Europäisches Patentamt
European Patent Office
Office européen des brevets

(11) **EP 3 427 589 A1**

(12) **EUROPÄISCHE PATENTANMELDUNG**

(43) Veröffentlichungstag:
16.01.2019 Patentblatt 2019/03

(51) Int Cl.:
*A21C 7/01* (2006.01)

(21) Anmeldenummer: 18182457.4

(22) Anmeldetag: 09.07.2018

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **13.07.2017 DE 102017212048**

(71) Anmelder: **WP Kemper GmbH**
**33397 Rietberg (DE)**

(72) Erfinder:
• **Doude van Troostwijk, Hans Herman**
**7522EM Enschede (NL)**
• **Wessels, Sebastian**
**33397 Rietberg (DE)**

(74) Vertreter: **Rau, Schneck & Hübner**
**Patentanwälte Rechtsanwälte PartGmbB**
**Königstraße 2**
**90402 Nürnberg (DE)**

(54) **WIRKANORDNUNG**

(57) Eine Wirkanordnung zum Wirken von Teiglingen hat ein Endlos-Wirk-Unterband (5) zum Wirken und Fördern der Teiglinge und ein Endlos-Wirk-Oberband (8), welches mit dem Unterband (5) zum Wirken der zwischen den Bändern angeordneten Teiglinge längs eines Wirkweges (W) zusammenwirkt. Zum Antreiben der Bänder (5, 8) dienen ein Unterband-Antrieb (6) und ein Oberband-Antrieb (9). Eine Steuereinrichtung (13) ist derart ausgeführt, dass sie einen Relativgeschwindigkeitsunterschied der Antriebsgeschwindigkeiten des Wirk-Unterbandes (5) und des Wirk-Oberbandes (8) zueinander vorgibt. Diese Vorgabe ist derart, dass längs mindestens eines Überroll-Wirkabschnitts (W1) längs des Wirkweges (W) das Wirk-Oberband (8) sich schneller in Förderrichtung (7) bewegt als das Wirk-Unterband (5). Längs mindestens eines Unterroll-Wirkabschnittes (W2) längs des Wirkweges (W) bewegt sich das Wirk-Unterband (5) schneller in Förderrichtung (7) als das Wirk-Oberband (8). Es resultiert als Wirkergebnis ein wenig unter Spannung stehender Teigling.

Fig. 1

**EP 3 427 589 A1**

**Beschreibung**

Die vorliegende Erfindung nimmt die Priorität der deutschen Patentanmeldung DE 10 2017 212 048.7 in Anspruch, deren Inhalt durch Bezugnahme hierin aufgenommen wird.

Die Erfindung betrifft eine Wirkanordnung zum Wirken von Teiglingen sowie ein Anlage zur Herstellung gewirkter Teiglinge mit mindestens einer derartigen Wirkanordnung.

Wirkanordnungen sind bekannt aus der DE 10 2008 026 937 A1, der DE 10 2016 212 296 A, der EP 1 132 002 B1 und der EP 0 449 840 B1.

Es ist eine Aufgabe der vorliegenden Erfindung, eine Wirkanordnung der eingangs genannten Art derart weiterzubilden, dass als Wirkergebnis ein möglichst wenig unter Spannung stehender Teigling resultiert.

Diese Aufgabe ist erfindungsgemäß gelöst durch eine Wirkanordnung mit den im Anspruch 1 angegebenen Merkmalen.

Erfindungsgemäß wurde erkannt, dass bei einer Wirkanordnung mit zusammenwirkenden Endlos-Wirkbändern ein entspannter, gewirkter Teig dann resultiert, wenn die Relativgeschwindigkeiten der beteiligten Wirkbänder so zueinander gesteuert vorgegeben werden, dass längs des gesamten Wirkweges der Wirkanordnung mindestens ein Überroll-Wirkabschnitt mit schneller in Förderrichtung laufendem Wirk-Oberband und mindestens ein Wirk-Unterrollabschnitt mit schneller in Förderrichtung laufendem Wirk-Unterband vorliegt. Der Teigling wird dann zwischen den beiden Wirkbändern in symmetrischer Weise gleichmäßig gewirkt, was zu einem entspannten Wirkresultat führt. In mindestens einem Überroll-Wirkabschnitt kann sich das Wirk-Unterband auch entgegen der Förderrichtung bewegen. Entsprechend kann sich in mindestens einem Unterroll-Wirkabschnitt das Wirk-Oberband auch entgegen der Förderrichtung bewegen.

Durchaus überraschend hat sich gezeigt, dass bei Einsatz einer derartigen Wirkanordnung der Verzicht auf einen nachfolgenden Gärschrank möglich ist. Bei der Wirkanordnung kann es sich um einen Langwirker, z. B. zur Herstellung von Baguette oder Baguette-Brötchen, handeln. Ein Abstand zwischen dem Wirk-Unterband und dem Wirk-Oberband längs des Wirkbandes kann mittels einer entsprechenden Einstelleinrichtung einstellbar vorgegeben werden. Die Einstelleinrichtung kann mit der Steuereinrichtung in Signalverbindung stehen. Die Abstandseinstellung kann gesteuert oder, beispielsweise abhängig von einer Kraftbeaufschlagung der Wirkbänder auf den Teigling, die über einen Kraftaufnehmer gemessen werden kann, geregelt erfolgen.

Ein sinusförmiger Relativgeschwindigkeitsunterschied nach Anspruch 2 kann mit geringem Aufwand vorgegeben werden.

Eine Ausgestaltung der Steuereinrichtung nach Anspruch 3 führt zu einem schonenden Einzug der Teiglinge in die Wirkanordnung.

Eine Ausgestaltung der Steuereinrichtung nach Anspruch 4 führt zu einem sicheren Einzug der Teiglinge in die Wirkanordnung.

Eine Ausgestaltung der Steuereinrichtung nach Anspruch 5 führt zu einem gut entspannten Wirkergebnis. Alternativ ist es möglich, verschiedene Anzahlen von Überroll- und Unterroll-Wirkabschnitten vorzugeben. Dies kann abhängig vom zu wirkenden Teig, von der zu wirkenden Teiglinggröße oder auch abhängig von Betriebsparametern der Wirkanordnung erfolgen.

Eine Ausgestaltung der Steuereinrichtung nach Anspruch 6 führt zu einer schonenden Ausgabe der Teiglinge aus der Wirkanordnung.

Eine Ausgestaltung der Steuereinrichtung nach Anspruch 7 führt zu einem kostengünstigen Antrieb für das Wirk-Unterband. Bei einer anderen Ausführung der Wirkanordnung kann das Wirk-Oberband mit gleichbleibender Geschwindigkeit angetrieben werden, wobei dann die Geschwindigkeit des Wirk-Unterbandes mit einem entsprechenden Geschwindigkeitsprofil angesteuert wird.

Die Vorteile einer Anlage nach Anspruch 8 entsprechen denen, die vorstehend unter Bezugnahme auf die Wirkanordnung bereits erläutert wurden.

Ein Band-Antrieb zum Bereitstellen eines Band-Geschwindigkeitsprofils zum Erzeugen des Relativgeschwindigkeitsunterschiedes kann so angeordnet sein, dass er von Band-Umlenkrollen, die den Wirkweg vorgeben, jeweils beabstandet ist. Es kann beispielsweise mindestens ein Drittel des gesamten Wirkweges zwischen dem Bandantrieb und der nächstbenachbarten, den Wirkweg vorgebenden Umlenkrolle vorliegen. Dies vermeidet verschleißfördernde Antriebseinflüsse auf das mit einem Geschwindigkeitsprofil anzusteuernde Wirkband.

Ein Ausführungsbeispiel der Erfindung wird nachfolgend anhand der Zeichnung näher erläutert. In dieser zeigen:

Fig. 1 eine schematische und innere Details preisgebende Seitenansicht einer Anlage zur Herstellung langgewirkter Teiglinge mit einer erfindungsgemäßen Wirkanordnung;

Fig. 2 perspektivisch eine Ansicht der Anlage im Bereich eines Einzuges zwischen einem Wirk-Unterband und einem Wirk-Oberband der Wirkanordnung im Betrieb; und

Fig. 3 ein Geschwindigkeits-Zeit-Diagramm, welches eine Steuerung eines Relativgeschwindigkeitsunterschiedes von Antriebsgeschwindigkeiten des Wirk-Unterbandes und des Wirk-Oberbandes in verschiedenen Zeitabschnitten insbesondere beim Einzug der Teiglinge in die Wirkanordnung und bei der Freigabe der Teiglinge aus der Wirkanordnung veranschaulicht.

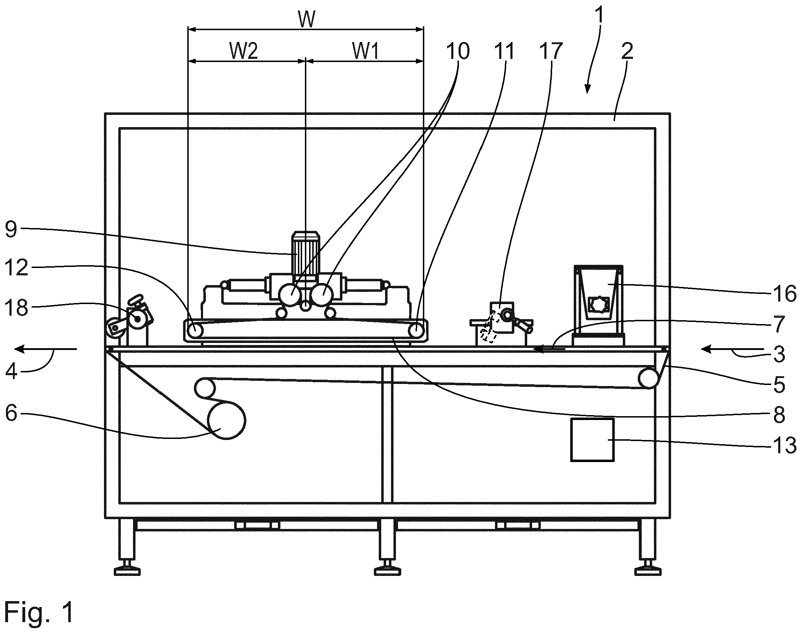

Eine Anlage 1 zur Herstellung langgewirkter Teiglinge umfasst ein Gehäuse 2 mit einem Einlauf 3 für zu wirkende Roh-Teiglinge sowie einen Auslauf 4 für die langgewirkten Teiglinge. Zwischen dem Einlauf 3 und dem Auslauf 4 verläuft ein Endlos-Wirk-Unterband 5, dessen Obertrum zum Fördern und Wirken der Teiglinge dient. Das Unterband 5 wird mittels eines schematisch in der Fig. 1 dargestellten Unterband-Antriebs 6 längs einer Förderrichtung 7 angetrieben. Das Unterband 5 wird über mehrere Umlenk- bzw. Spannrollen geführt.

Mit dem Endlos-Wirk-Unterband wirkt ein Untertrum eines Endlos-Wirk-Oberbandes 8 zum Wirken der zwischen dem Unterband 5 und dem Oberband 8 angeordneten Teiglinge längs eines Wirkweges W zusammen. Eine zwischen den beiden Bändern 5, 8 vorgegebene Wirkebene verläuft senkrecht zur Zeichenebene nach Fig. 1. Das Wirk-Unterband 5 und das Wirk-Oberband 8 sind Bestandteile einer Wirkanordnung der Anlage 1.

Zum Antreiben des Wirk-Oberbandes 8 dient ein Oberband-Antrieb 9. Eine Motorwelle des Oberband-Antriebs 9 verläuft vertikal und wird mittels eines Umlenkgetriebes auf mindestens eine horizontal und senkrecht zur Zeichenebene der Fig. 1 verlaufende Oberband-Abtriebswelle 10 übertragen. Bei der dargestellten Ausführung erfolgt diese Übertragung auf zwei symmetrisch rechts und links einer Mitte des Oberbandes 8 angeordneten Oberband-Antriebswellen 10. Dies stellt eine symmetrische Kraftübertragung vom Antriebsmotor des Oberband-Antriebs 9 auf das Oberband 8 sicher. Das Umlenkgetriebe ist als Kegelradgetriebe ausgeführt. Der Oberband-Antrieb 9 hat eine Drehzahlregelung.

Auch das Oberband 8 wird über mehrere Umlenk- bzw. Spannrollen geführt. Der Wirkweg W wird zwischen zwei maximal längs der Förderrichtung 7 beabstandeten Umlenkrollen 11 und 12 vorgegeben. Der Oberband-Antrieb 9 ist, gesehen in der Förderrichtung 7, zwischen den beiden Umlenkrollen 11, 12 angeordnet. Diese Anordnung ist so, dass zwischen dem Oberband-Antrieb 9 und der diesem nächstbenachbarten, den Wirkweg W vorgebenden Umlenkrolle 11, 12 mindestens ein Drittel des gesamten Wirkweges W liegt. Bei der in Fig. 1 dargestellten Ausführung liegt der Oberband-Antrieb 9 in der Förderrichtung 7 genau mittig zwischen den beiden den Wirkweg W vorgebenden Umlenkrollen 11, 12.

Der Unterband-Antrieb 6 einerseits und der Oberband-Antrieb 9 andererseits stehen in nicht dargestellter Weise mit einer Steuereinrichtung 13 der Wirkanordnung in Signalverbindung. Die Steuereinrichtung 13 gibt einen Relativgeschwindigkeitsunterschied der Antriebsgeschwindigkeiten $v_{UB}$ des Wirk-Unterbandes 5 und $v_{OB}$ des Wirk-Oberbandes 8 zueinander vor.

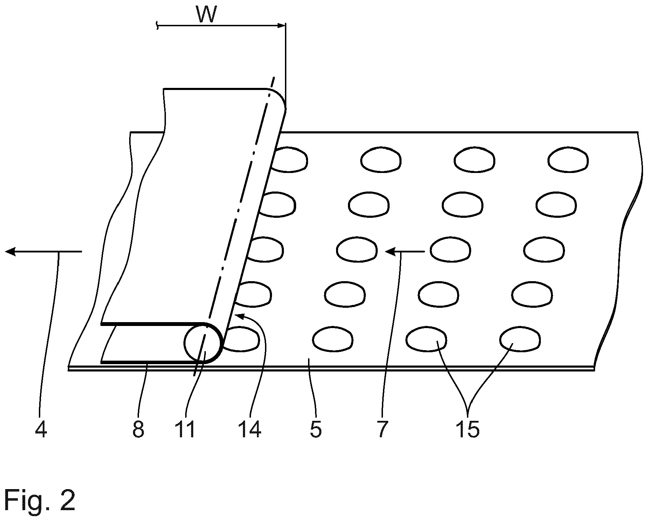

Fig. 2 zeigt einen Ausschnitt der Anlage 1 im Bereich eines Einzuges 14 der Teiglinge 15 beim Eintritt zwischen das Wirk-Unterband 5 und das Wirk-Oberband 8 zu Beginn des Wirkweges W. Der perspektivischen Ansicht nach Fig. 2 kann zudem entnommen werden, dass die Anlage 1 mehrere Teigling-Reihen, bei der dargestellten Ausführung fünf Teigling-Reihen parallel bearbeitet. Auch eine andere Zahl von BearbeitungsReihen, beispielsweise im Bereich zwischen zwei und acht BearbeitungsReihen, können je nach Ausführung der Anlage 1 bearbeitet werden.

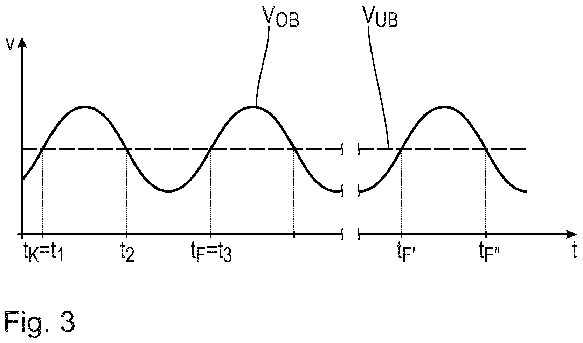

Fig. 3 zeigt das relative Verhältnis der Antriebsgeschwindigkeiten $v_{UB}$, $v_{OB}$ des Unterbandes 5 und des Oberbandes 8 zueinander, der von der Steuereinrichtung 13 vorgegeben wird. Dargestellt ist ein Geschwindigkeits-Zeit-(v/t)Diagramm.

Das Unterband 5 bewegt sich bei der dargestellten Ausführung mit gleichbleibender Geschwindigkeit $v_{UB}$ in der Förderrichtung 7. Das Oberband 8 folgt einer sinusförmigen Geschwindigkeitskurve $v_{OB}$. Entsprechend folgt bei der Geschwindigkeitssteuerung nach Fig. 3 der Relativgeschwindigkeitsunterschied der Antriebsgeschwindigkeiten $v_{UB}$, $v_{OB}$ einer Sinuskurve.

Die Steuereinrichtung 13 ist derart ausgeführt und arbeitet derart, dass zu Beginn des Wirkweges W, also im Bereich des Einzuges 14, das Wirk-Unterbund 5 und das Wirk-Oberband 8 sich mit gleicher Geschwindigkeit $v = v_{UB}$ in der Förderrichtung 7 bewegen. In der Fig. 3 ist ein derartiger Kontakteinzugs-Zeitpunkt bei $t_K$ hervorgehoben. Die Steuerungseinrichtung 13 ist mit den der Wirkanordnung vorgelagerten Komponenten, insbesondere mit den Anlagenkomponenten vor dem Einlauf 3, derart synchronisiert, dass der Zeitpunkt $t_K$ genau dann erreicht ist, wenn, wie in der Fig. 2 dargestellt, die Teiglinge 15 genau im Bereich des Einzuges 14 vorliegen.

Im weiteren Wirkweg W nach dem Einzug 14 bewegt sich, wiederum gesteuert durch die Steuereinrichtung 13, längs mindestens eines Überroll-Wirkabschnittes W1 das Wirk-Oberband 8 zunächst schneller in der Förderrichtung 7 als das Wirk-Unterband 5. Dieser Zustand, dass sich das Oberband 8 schneller in der Förderrichtung 7 bewegt als das Unterband 5, liegt nach dem Kontaktzeitpunkt $t_K$ (= $t_1$) während eines Zeitraums $t_2 - t_1$ vor. Es gilt also:

$$W1 = (t_2 - t_1) \cdot v_{UB}.$$

Die Steuereinrichtung 13 steuert die Antriebe 6, 9 weiterhin so an, dass längs mindestens eines weiteren Unterroll-Wirkabschnitts W2 sich das Wirk-Unterband 5 schneller in der Förderrichtung 7 bewegt als das Wirk-Oberband 8. Der entsprechende Zeitraum ist in der Fig. 3 bei $t_3 - t_2$ dargestellt. Entsprechend gilt:

$$W2 = (t_3 - t_2) \cdot v_{UB}.$$

Eine Abgabe bzw. Freigabe der langgewirkten Teiglinge 15 am Ende des Wirkweges W erfolgt dann zum Zeitpunkt $t_3 = t_F$, wenn wiederum beide Bänder 5, 8 die gleiche Geschwindigkeit haben.

Bei der dargestellten Ausführung gilt zudem W1 = W2 und W = W1 + W2.

Der gesamte Wirkweg W ist bei der dargestellten Ausführung also zusammengesetzt aus einem führenden Überroll-Wirkabschnitt W1 und einem nachfolgenden Unterroll-Wirkabschnitt W2. Längs des Wirkweges W können sich, abhängig von der Ansteuerung der Antriebe 6, 9, auch andere Zusammensetzungen des gesamten Wirkweges W in mehrere Überroll-Wirkabschnitte W1a, W1b, ... und in jeweils zwischenliegende Unterroll-Wirkabschnitte W2a, W2b, ... ergeben.

Die Ansteuerung über die Steuereinrichtung 13 kann so sein, dass längs des Wirkweges W eine gleiche Anzahl von Überroll- und Unterroll-Wirkabschnitten vorliegt.

Entsprechend erfolgt dann die Freigabe wiederum am Ende eines Unterroll-Wirkabschnittes zum Zeitpunkt $t_{F'}$, wie in der Fig. 3 rechts dargestellt. Grundsätzlich könnte eine Freigabe aber auch am Ende eines Überroll-Wirkabschnitts, beispielsweise zu einem Zeitpunkt $t_{F2''}$ erfolgen, wie ebenfalls in der Fig. 3 rechts angedeutet.

Zwischen dem Einlauf 3 und der Wirkanordnung mit den zusammenwirkenden Bändern 5, 8 sind noch zwei Bearbeitungseinheiten 16, 17 oberhalb des Unterbandes 5 angeordnet. Bei der Bearbeitungseinheit 16 handelt es sich um eine Mehlstreu-Einheit. Bei der Bearbeitungseinheit 17 handelt es sich um eine Zentriereinheit zum Ausrichten der Teiglinge. Hierüber kann sichergestellt werden, dass die Teiglinge der mehreren Bearbeitungsreihen der Anlage 1 jeweils zeitgleich bei den nachfolgenden Bearbeitungseinheiten und insbesondere bei der Wirkanordnung ankommen.

Im Bereich zwischen der Wirkanordnung und dem Auslauf 4 ist eine weitere Bearbeitungseinheit 18 angeordnet. Hierbei handelt es sich um eine Andrückwalze.

Nach erfolgtem Langwirken in der Wirkanordnung verlassen die langgewirkten Teiglinge das Gehäuse 2 durch den Auslauf 4 und werden einer weiteren Bearbeitung zugeführt.

Ein Gärschrank als Bestandteil der Anlage 1 ist nicht erforderlich. Durch die Möglichkeit eines gleichmäßigen Langwirkens mit vorgegebenem Verhältnis aus Überroll- und Unterroll-Wirkabschnitten resultiert ein entspannter, gewirkter Teig, bei dem ein Nachgären bzw. Entspannen nicht erforderlich ist.

Ein Abstand zwischen dem Wirk-Unterband 5 und dem Wirk-Oberband 8 längs des Wirkweges W kann mit Hilfe einer nicht dargestellten Einstelleirichtung vorgegeben werden. Diese Einstelleinrichtung steht mit der Steuereinrichtung 13 in Signalverbindung. Die Wirkanordnung kann zudem Kraftaufnehmer aufweisen, mit der eine Kraftbeaufschlagung durch die Bänder 5, 8 auf die Teiglinge 15 längs des Wirkweges W gemessen werden kann. Auch derartige Kraftaufnehmer können mit der Steuereinrichtung 13 in Signalverbindung stehen. Hierüber kann insbesondere eine geregelte Band-Abstandsvorgabe über die Einstelleinrichtung erfolgen. Der Abstand zwischen den Bändern 5, 8 längs des Wirkweges W kann so vorgegeben werden, dass dieser längs des Wirkweges W nicht konstant ist, sondern beispielsweise im Bereich des Einzugs 14 größer ist als im weiteren Verlauf des Wirkweges W.

Über die Steuereinrichtung 13 lässt sich ein zeitlicher Offset des Geschwindigkeitsprofils nach Fig. 3 so vorgeben, dass beispielsweise zum Zeitpunkt $t_K$ die Teiglinge sich tatsächlich genau im Bereich des Einzugs 14 befinden. Zudem lässt sich die Periode der Sinuskurve (Zeitraum $t_3 - t_1$) und auch die Geschwindigkeitsamplitude (Unterschied zwischen der maximalen/minimalen Oberbandgeschwindigkeit zur Unterbandgeschwindigkeit) vorgeben.

**Patentansprüche**

1. Wirkanordnung zum Wirken von Teiglingen,

   - mit einem Endlos-Wirk-Unterband (5) zum Wirken und Fördern der Teiglinge,
   - mit einem Endlos-Wirk-Oberband (8), welches mit dem Wirk-Unterband (5) zum Wirken der zwischen dem Wirk-Unterband (5) und dem Wirk-Oberband (8) angeordneten Teiglinge längs eines Wirkweges (W) zusammenwirkt,
   - mit einem Unterband-Antrieb (6) zum Antreiben des Wirk-Unterbandes (5),
   - mit einem Oberband-Antrieb (9) zum Antreiben des Wirk-Oberbandes (8),
   - mit einer Steuereinrichtung (13), welche derart ausgeführt ist, dass sie einen Relativgeschwindigkeitsunterschied der Antriebsgeschwindigkeiten ($v_{UB}$, $v_{OB}$) des Wirk-Unterbandes (5) und des Wirk-Oberbandes (8) zueinander derart vorgibt, dass längs mindestens eines Überroll-Wirkabschnitts (W1) längs des Wirkweges (W) das Wirk-Oberband (8) sich schneller in Förderrichtung (7) bewegt als das Wirk-Unterband (5), wobei längs mindestens eines Unterroll-Wirkabschnitts (W2) längs des Wirkweges (W) das Wirk-Unterband (5) sich schneller in Förderrichtung (7) bewegt als das Wirk-Oberband (8).

2. Wirkanordnung nach Anspruch 1, **dadurch gekennzeichnet, dass** die Steuereinrichtung (13) derart ausgeführt ist, dass der Relativgeschwindigkeitsunterschied einer Sinuskurve folgt.

3. Wirkanordnung nach Anspruch 1 oder 2, **dadurch gekennzeichnet, dass** die Steuereinrichtung (13) derart ausgeführt ist, dass zu Beginn des Wirkweges das Wirk-Unterband (5) und das Wirk-Oberband (8) sich mit gleicher Geschwindigkeit in Förderrichtung (7) bewegen.

4. Wirkanordnung nach einem der Ansprüche 1 bis 3, **dadurch gekennzeichnet, dass** die Steuereinrichtung (13) derart ausgeführt ist, dass ein erster Wirkabschnitt nach Beginn des Wirkweges (W) als Überroll-Wirkabschnitt (W1) ausgeführt ist.

5. Wirkanordnung nach einem der Ansprüche 1 bis 4, **dadurch gekennzeichnet, dass** die Steuereinrichtung (13) derart ausgeführt ist, dass längs des Wirkweges (W) eine gleiche Anzahl von Überroll-Wirkabschnitten (W1) und Unterroll-Wirkabschnitten (W2) vorliegt.

6. Wirkanordnung nach einem der Ansprüche 1 bis 5, **dadurch gekennzeichnet, dass** die Steuereinrichtung (13) derart ausgeführt ist, dass zum Ende des Wirkweges (W) das Wirk-Unterband (5) und das Wirk-Oberband (8) sich mit gleicher Geschwindigkeit in Förderrichtung (7) bewegen.

7. Wirkanordnung nach einem der Ansprüche 1 bis 6, **dadurch gekennzeichnet, dass** die Steuereinrichtung (13) derart ausgeführt ist, dass sich das Wirk-Unterband (5) mit gleichbleibender Geschwindigkeit in Förderrichtung (7) bewegt.

8. Anlage (1) zur Herstellung gewirkter Teiglinge mit mindestens einer Wirkanordnung nach einem der Ansprüche 1 bis 7.

Fig. 1

Fig. 2

Fig. 3

Europäisches
Patentamt

European
Patent Office

Office européen
des brevets

# EUROPÄISCHER RECHERCHENBERICHT

Nummer der Anmeldung

EP 18 18 2457

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 674 547 A (VROUWENVELDER CORNELIS CURINUS [NL]) 7. Oktober 1997 (1997-10-07) | 1 | INV. A21C7/01 |
| A | * Abbildung 2 *<br>* Spalte 3, Zeilen 22-59 *<br>----- | 2-8 | |
| A | DE 10 2016 212296 A1 (WP KEMPER GMBH [DE]) 12. Januar 2017 (2017-01-12)<br>* Abbildungen 1-3 *<br>* Absätze [0042] - [0055] *<br>----- | 1-8 | |
| A | DE 103 45 846 A1 (WERNER & PFLEIDERER LEBENSMITT [DE])<br>14. April 2005 (2005-04-14)<br>* Abbildung 2 *<br>* Absatz [0022] *<br>----- | 1-8 | |

RECHERCHIERTE SACHGEBIETE (IPC)

A21C

Der vorliegende Recherchenbericht wurde für alle Patentansprüche erstellt

| Recherchenort | Abschlußdatum der Recherche | Prüfer |
|---|---|---|
| Den Haag | 31. Oktober 2018 | De Meester, Reni |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**EP 3 427 589 A1**

**ANHANG ZUM EUROPÄISCHEN RECHERCHENBERICHT
ÜBER DIE EUROPÄISCHE PATENTANMELDUNG NR.**

EP 18 18 2457

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-10-2018

| Im Recherchenbericht angeführtes Patentdokument | Datum der Veröffentlichung | Mitglied(er) der Patentfamilie | Datum der Veröffentlichung |
|---|---|---|---|
| US 5674547 A | 07-10-1997 | AU 5718694 A | 22-06-1994 |
| | | DE 69307921 D1 | 13-03-1997 |
| | | DE 69307921 T2 | 04-09-1997 |
| | | EP 0669806 A1 | 06-09-1995 |
| | | ES 2100039 T3 | 01-06-1997 |
| | | NL 9202023 A | 16-06-1994 |
| | | US 5674547 A | 07-10-1997 |
| | | WO 9412037 A1 | 09-06-1994 |
| DE 102016212296 A1 | 12-01-2017 | KEINE | |
| DE 10345846 A1 | 14-04-2005 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 102017212048
- DE 102008026937 A1
- DE 102016212296 A
- EP 1132002 B1
- EP 0449840 B1